# EUROPEAN PATENT APPLICATION

(11) **EP 3 591 791 A1**
(43) Date of publication of application: **08.01.2020**
(21) Application number: 18184647.8
(22) Date of filing: 20.07.2018
(51) Int. Cl.: H02J 3/38, H02J 3/28, H02J 3/48, H02J 13/00

(54) **WIND-SOLAR-GAS COMPLEMENTARY AND COUPLED POWER GENERATION SYSTEM AND METHOD**

(30) Priority: 02.07.2018 CN 201810712359
(71) Applicant: Hepu Technology Development (Beijing) Co. Ltd., 100176 Beijing (CN)
(72) Inventor: Cui, Hua, Beijing (CN); Yang, Yusen, Beijing (CN); Xu, Bo, Beijing (CN); Tan, Zhi, Beijing (CN); Chen, Hui, Beijing (CN)
(74) Representative: Huang, Liwei

(57) **Abstract**

The present invention relates to a wind-solar-gas complementary and coupled power generation system and method. A complementary and coupled power generation control platform, a wind or solar power generation device, and a gas power generation device of the wind-solar-gas complementary and coupled power generation system are connected to one another through a power line. The complementary and coupled power generation control platform performs complementary coupling on the power generated by the wind or solar power generation device and the gas power generation device, and transmits the power generated by the wind or solar power generation device and the gas power generation device to a regional power grid. The wind or solar power generation device comprises at least one of a wind power generation device and a solar power generation device. The present invention utilizes gas power generation with the most powerful peak regulation capability to couple with wind power generation and/or solar power generation, thereby ensuring the stable output of the total power generation of the three power generation systems and meeting the normal load demand of the power grid.

## Description

### TECHNICAL FIELD

The present invention relates to the field of power generation, and in particular to a complementary and coupled power generation system and method which utilizes wind power, solar power generation and gas power generation.

### BACKGROUND

In recent years, the power market in northeast, north and northwest China is rich in capacity, but the peak regulation power supply such as power generated by gas turbines and pumped storage is scarce. The contradiction between power grid peak regulation and thermal power unit flexibility is prominent. The capability of the grid absorbing new energy sources such as wind power, solar power, hydropower and nuclear power is insufficient, and the phenomenon of abandoning wind, solar, water and nuclear power is serious. The cogeneration unit operates in a "power generation amount set by heat" mode with a peak regulation capacity of only about 10%. The difficulty of peak regulation has become the most prominent problem in the operation of the grid.

As global energy consumption tends to be tight, people are increasingly concerned about the environment. Energy shortage and environmental pollution have become important issues affecting people's lives and restricting social development. Countries around the world are striving to develop clean new energy sources.

Wind power has an overwhelming advantage in the world's renewable energy generation capacity, and wind energy accounts for more than half of the renewable energy used. Wind power generation is also the most advanced in renewable energy applications. In recent years, the world's wind power generation has grown rapidly and the prospects are bright.

As a clean and environmentally friendly natural energy source with infinite reserves, solar energy takes a growing proportion in all types of energy used by humans. The maturity and power generation efficiency of photovoltaic and solar thermal power generation products are increasing. The core photovoltaic manufacturing enterprises in China have already released a fair price grid-connection roadmap for photovoltaic power generation, and solar-thermal power generation is more and more favored by the industry in China, with good energy utilization efficiency and market development prospects.

However, wind power generation and solar power generation still have some problems. Due to wind conditions and light conditions, the generated energy of the existing wind power generation or solar power generation changes dynamically with changes in light intensity and wind force, so the generated energy is an unstable power source that the power grid is unwilling to accept. How to perform power grid peak regulation for these two kinds of unstable power generation devices is a difficult problem for all regional power grid managers.

### SUMMARY

The present invention aims to utilize gas power generation with the most powerful peak regulation capability to couple with the above-mentioned wind power generation and/or solar power generation, thereby proposing a wind-solar-gas complementary and coupled power generation system and method to ensure the stable output of the total power generation of the three power generation systems, satisfying the normal load demand of the power grid.

The present invention is achieved by the following technical solutions.

A wind-solar-gas complementary and coupled power generation system, comprises: a complementary and coupled power generation control platform, a wind or solar power generation device, and a gas power generation device, wherein the complementary and coupled power generation control platform, the wind or solar power generation device, and the gas power generation device are connected to one another through a power line, the complementary and coupled power generation control platform performs complementary coupling on the power generated by the wind or solar power generation device and the gas power generation device, and transmits the power generated by the wind or solar power generation device and the gas power generation device to a regional power grid, and the wind or solar power generation device comprises at least one of a wind power generation device and a solar power generation device.

Furthermore, the gas power generation device comprises at least one of a gas turbine generator, a gas internal combustion engine generator, a gas external combustion engine generator, a hydrogen fuel cell generator or a solar-thermal-gas coupled Stirling generator.

Furthermore, the gas used in the gas power generation device is a combustible gas, and the combustible gas is derived from any one or a combination of a natural gas pipeline, a natural gas storage tank, an electrolytic hydrogen production device, a biomass gas supply device, a biogas gas supply device, a coke oven gas supply device, a coalbed gas, and an oilfield associated gas.

Furthermore, the wind power generation device comprises at least one of a horizontal-shaft wind turbine or a vertical-shaft wind turbine.

Furthermore, the solar power generation device comprises any one of a mono crystalline silicon solar cell, a polycrystalline silicon solar cell, an amorphous silicon solar cell, or a polycomponent compound solar cell.

Furthermore, the gas power generation device is any one of a pure power generation gas turbine unit, a cogeneration gas turbine unit, and a thermal, power and cooling tri-generation gas turbine unit, and the cogeneration or thermal, power and cooling tri-generation gas turbine unit can be equipped with cold storage or heat storage facilities, and performs electric heating or electric cooling using grid off-peak electricity to complement the insufficient heating or cooling of the cogeneration or tri-generation unit.

Furthermore, the gas power generation device further has a combustible gas storage device to meet the gas supply demand of the gas power generation device at any time.

Furthermore, the wind-solar-gas complementary and coupled power generation system further comprises a power grid dispatching center, wherein the power grid dispatching center is communicatively connected to the complementary and coupled power generation control platform, the wind or solar power generation device and the gas power generation device, and the complementary and coupled power generation control platform uniformly receives a dispatching instruction from the power grid dispatching center.

A power generation method adopts the wind-solar-gas complementary and coupled power generation system to generate power by the following steps:
S1: setting, by the complementary and coupled power generation system control platform, a real-time target total power generation value of the wind-solar-gas power complementary and coupled power generation system;
S2: setting, by the complementary and coupled power generation system control platform, a real-time target gas-complemented power generation value according to wind resource and light resource prediction results at the current time point and a future time period;
S3: determining whether the gas storage amount of the gas power generation device is sufficient, wherein if the determination result is yes, proceed to step S4; and if the determination result is no, the gas power generation device proceeds to step S7;
S4: connecting all the real-time target power generation values P_{wind-solar} of the wind-solar power generation device to a regional power grid access system;
S5: calculating a real-time target gas-complemented power generation value P_{gas} = Pₛᵤₘ-P_{wind-solar}, where the Pₛᵤₘ is a real-time target coupled power generation value of the wind-solar-gas complementary and coupled power generation system;
S6: adjusting the gas power generation device to provide the real-time target gas-complemented power generation value P_{gas};
S7: when the gas storage amount is insufficient, invoking the power grid peak regulation energy; and
S8: ensuring that the real-time target total power generation value of the coupling power generation system meets the grid demand.

The present invention utilizes the characteristics of different power generation modes in an organically complementary manner, fully utilizes the situation where solar power generation prevails at daytime, wind power generation prevails at night, while wind and solar power generation is insufficient during the middle period, and utilizes the gas stored in the gas storage tank or the natural gas pipeline to adjust the gas power generation device to balances the total generated energy, so that the real-time target total power generation value after coupling meets the grid demand.

In particular, the present invention has the following advantages:
1. Two renewable energy generation methods of wind power generation and solar power generation are utilized to the fullest extent. Because of the coupled power generation system, the problem of wind and light abandonment can be completely avoided.
2. The rapid load fluctuation and peak regulation capability of the gas power generation device is utilized to ensure stable power output of the coupled power generation systems.
3. The coupled power generation system cooperates with the power grid dispatching center to ensure the load balance adjustment of the regional power grid.

### BRIEF DESCRIPTION OF THE DRAWINGS

The drawings of the present invention will be briefly described in the following in order to illustrate the technical solution of the present invention more clearly. It is obvious that the drawings in the following description are only some embodiments of the present invention, and those of ordinary skill in the art may also obtain other drawings from these drawings without inventive efforts.
FIG. 1 is a first schematic diagram of a wind-solar-gas complementary and coupled power generation system according to an embodiment of the present invention.
FIG. 2 is a second schematic diagram of a wind-solar-gas complementary and coupled power generation system according to an embodiment of the present invention.
FIG. 3 is a third schematic diagram of a wind-solar-gas complementary and coupled power generation system according to an embodiment of the present invention.
FIG. 4 is a schematic flow chart of a power generation method according to an embodiment of the present invention.

In order to further clearly illustrate the structure of the present invention and the connection relationship between the components, the following reference numerals are given and explained:

14, power grid dispatching center; 15, complementary and coupled power generation control platform; 16, booster station; 17, first transformer; 18, inverter and transformer; 19, second transformer; 20, wind power generation device; 21, solar power generation device; 22, gas power generation device.

### DETAILED DESCRIPTION

In order to further understand the present invention, the present invention will be described in more detail below in conjunction with the specific embodiments. In order to describe the composition and connection relationship of the wind-solar-gas complementary and coupled power generation system of the present invention, the solid line in the drawings of the present specification indicates the power line connection, and the broken line indicates the communication connection.

In the description of the present specification, the description with reference to the terms "one embodiment", "some embodiments", "an illustrative embodiment", "an example", "a specific example", or "some examples", etc. indicates that particular features, structures, materials or characteristics described in this embodiment or example are included in at least one embodiment or example of the present invention. In the present specification, the schematic representation of the above terms does not necessarily refer to the same embodiment or example. Furthermore, the particular features, structures, materials, or characteristics described may be combined in a suitable manner in any one or more embodiments or examples.

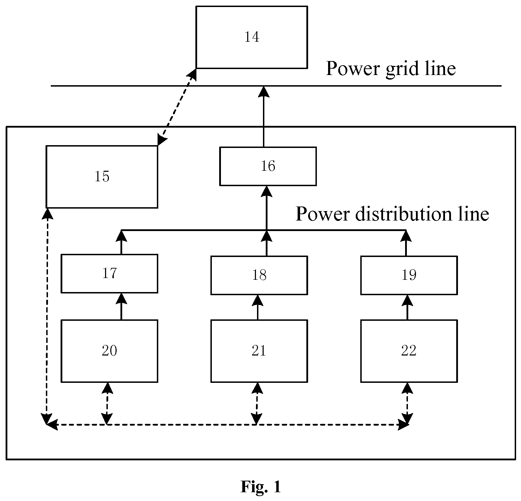

As shown in FIGS. 1, 2, and 3, the present invention provides a wind-solar-gas complementary and coupled power generation system including a complementary and coupled power generation control platform 15, a wind or solar power generation device, and a gas power generation device 22. The wind or solar power generation device includes at least one of a wind power generation device 20 and a solar power generation device 21.

The complementary and coupled power generation control platform 15, the wind or solar power generation device, and the gas power generation device 22 are connected to one another through a power line. The complementary and coupled power generation control platform 15 performs complementary coupling on the power generated by the wind or solar power generation device and the gas power generation device 22, and transmits the power generated by the wind power generation device 20, the solar power generation device 21 and the gas power generation device 22 to a booster station via a power distribution line through a first transformer 17, an inverter and transformer 18, and a second transformer 19, and then to a grid line by the booster station.

The wind-solar-gas complementary and coupled power generation system provided by the present invention further includes a power grid dispatching center 14. The power grid dispatching center 14 is communicatively connected to the complementary and coupled power generation control platform 15, the wind-solar-gas power generation device, and the gas power generation device 22. The power grid dispatching center 14 is configured to send a power generation load demand value to the complementary and coupled power generation system control platform 15 to match the real-time target total power generation value of the wind-solar-gas complementary and coupled power generation system with the power generation load demand value.

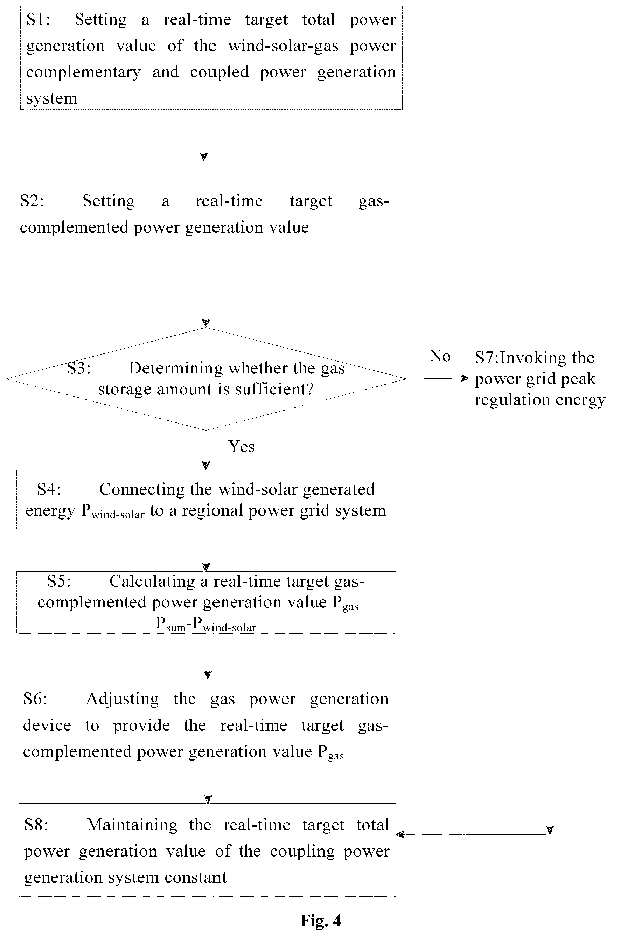

Referring to FIG. 4, in order to achieve the load balancing adjustment purpose of a regional power grid, an embodiment of the present invention further provides a power generation method by using the wind-solar-gas complementary and coupled power generation system according to the embodiment of the present invention with the following steps.

In step S1, the complementary and coupled power generation system control platform sets a real-time target total power generation value of the wind power complementary and coupled power generation system.

In step S2, the complementary and coupled power generation system control platform sets a real-time target gas-complemented power generation value according to wind resource and light resource prediction results at the current time point and a future time period.

In step S3, whether the gas storage amount of the gas power generation device is sufficient is determined, wherein if the determination result is yes, proceed to step S4; and if the determination result is no, the gas power generation device proceeds to step S7.

In step S4, all real-time target power generation values P_{wind-solar} of the wind-solar power generation device are connected a regional power grid access system.

In step S5, a real-time target gas-complemented power generation value P_{gas} = Pₛᵤₘ-P_{wind-solar} is calculated, where Pₛᵤₘ is a real-time target coupled power generation value of the wind-solar-gas complementary and coupled power generation system.

In step S6, the gas power generation device is adjusted to provide the real-time target gas-complemented power generation value P_{gas}.

In step S7, when the gas storage amount is insufficient, the power grid peak regulation energy is invoked.

In step S8, it is ensured that the real-time target total power generation value of the coupling power generation system meets the grid demand.

Preferably, in step S1 of the power generation method provided according to an embodiment of the present invention by using the wind-solar-gas complementary and coupled power generation system according to the embodiment of the present invention, the power generation load demand value is sent to the complementary and coupled power generation system control platform 15 by the power grid dispatching center 14, and then the complementary and coupled power generation system control platform 15 sets a total generated energy target value of the wind-solar-gas complementary and coupled power generation system.

In the embodiment of the present invention, according to the situation that solar power generation is dominant at daytime, wind power generation prevails at night, and wind and solar power generation are insufficient during the middle period, the gas power generation device 22 is used to balance the generated energy, thereby ensuring that the total power generation target value after coupling meets the demand of the power grid, and realizing the load balance adjustment of a regional power grid.

### Embodiment 1

As shown in FIG. 1, an embodiment of the present invention provides a wind-solar-gas complementary and coupled power generation system including a power grid dispatching center 14, a complementary and coupled power generation control platform 15, a wind power generation device 20, a solar power generation device 21 and a gas power generation device 22. The wind power generation device 20 is a wind power generator. The solar power generation device 21 is a solar panel. The gas power generation device 22 is any one of a gas turbine, a gas internal combustion engine, and a gas Stirling generator. The power grid dispatching center 14 is communicatively connected to the complementary and coupled power generation control platform 15, the wind power generator, the solar panel, and any one of the gas turbine, the gas internal combustion engine, and the gas Stirling generator. The complementary and coupled power generation control platform 15, the wind power generator, the solar panel, and any one of the gas turbine, the gas internal combustion engine, and the gas Stirling generator are connected to one another through a power line. The complementary and coupled power generation control platform 15 performs complementary coupling on the power generated by the wind power generator, the solar panel and any one of the gas turbine, the gas internal combustion engine, and the gas Stirling generator, and transmits the power generated by the wind generator, the solar panel, and any one of the gas turbine, the gas internal combustion engine, and the gas Stirling generator to a regional power grid.

The gas power generation device is any one of a pure power generation gas turbine unit, a cogeneration gas turbine unit, and a thermal, electric and cooling tri-generation gas turbine unit. The cogeneration or the thermal, electric and cooling tri-generation gas turbine unit can be equipped with cold storage or heat storage facilities, and performs electric heating or electric cooling using the power grid peak regulation energy to complement the shortage of heating or cooling for the cogeneration or the thermal, electric and cooling tri-generation gas turbine unit.

### Embodiment 2

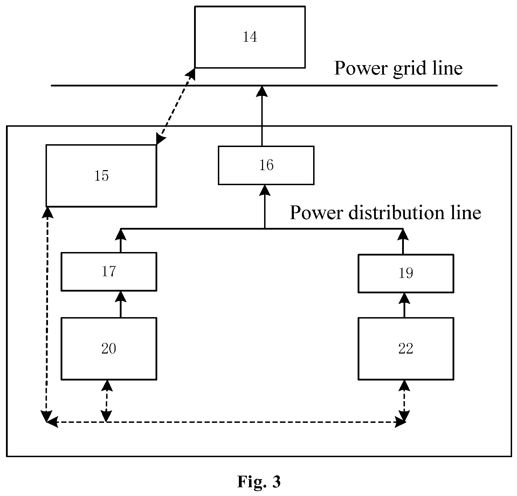

As shown in FIG. 3, an embodiment of the present invention provides a wind-solar-gas complementary and coupled power generation system, which includes a power grid dispatching center 14, a complementary and coupled power generation control platform 15, a wind power generation device 20, a solar power generation device 21 and a gas power generation device 22. The solar power generation device 21 is a disc-type solar-thermal Stirling generator. The gas power generation device 22 is gas Stirling power generator. The power grid dispatching center 14 is communicatively connected to the complementary and coupled power generation control platform 15, the wind power generation device 20, the disc-type solar-thermal Stirling generator 21 and the gas Stirling generator 22. The complementary and coupled power generation control platform 15, the wind power generation device 20, the disc-type solar-thermal Stirling generator, and the gas Stirling generator are connected to one another through a power line. The complementary and coupled power generation control platform 15 performs complementary coupling on the power generated by the wind power generation device 20, the disc-type solar-thermal Stirling generator, and the gas Stirling generator, and transmits the power generated by the wind power generation device 20, the disc-type solar-thermal Stirling generator, and the gas Stirling generator to a regional power grid.

### Embodiment 3

An embodiment of the present invention provides a wind-solar-gas complementary and coupled power generation system, which includes a power grid dispatching center 14, a complementary and coupled power generation control platform 15, a wind power generation device 20, a solar power generation device 21, and a gas power generation device. 22. The wind power generator 20 is a wind power generator. The solar power generator 21 is a solar panel or a solar-thermal power generator. The gas power generation device 22 is a fuel cell generator. The power grid dispatching center 14 is communicatively connected to the complementary and coupled power generation control platform 15, the wind power generator, the solar panel or the solar-thermal generator and the fuel cell generator. The complementary and coupled power generation control platform 15, the wind power generator, the solar panel or the solar-thermal generator and the fuel cell generator are connected to one another through a power line. The complementary and coupled power generation control platform 15 performs complementary coupling on the power generated by the wind power generator, the solar panel or the solar-thermal generator, and the fuel cell generator, and transmits the power generated by the wind power generator, the solar panel or the solar-thermal generator, and the fuel cell generator to a regional power grid.

### Embodiment 4

An embodiment of the present invention provides a wind-solar-gas complementary and coupled power generation system, which includes a power grid dispatching center 14, a complementary and coupled power generation control platform 15, a wind power generation device 20, a solar power generation device 21, a gas power generation device 22 and a storage battery. The wind power generation device 20 is a wind power generator. The solar power generation device 21 is a solar panel. The gas power generation device 22 is a gas power generator. The power grid dispatching center 14 is communicatively connected to the complementary and coupled power generation control platform 15, the wind power generator, the solar panel, the storage battery, and the gas power generator. The complementary and coupled power generation control platform 15, the wind power generator, the solar panel, and the storage battery and the gas power generator are connected to one another through a power line. The complementary and coupled power generation control platform 15 performs complementary coupling on the power generated by the wind power generator, the solar panel, and the gas power generator, and transmits the power generated by the wind power generator, the solar panel and the gas power generator and the power output by the storage battery to a regional power grid. By adding the energy storage equipment, the coupled power generation system can make the storage battery part responsive to the grid load demand more flexibly and quickly.

### Embodiment 5

An embodiment of the present invention provides a wind-gas complementary and coupled power generation system including a power grid dispatching center 14, a complementary and coupled power generation control platform 15, a wind power generation device 20, and a gas power generation device 22. The wind power generation device 20 is a wind power generator. The gas power generation device 22 is a gas power generator. The power grid dispatching center 14 is communicatively connected to the complementary and coupled power generation control platform 15, the wind power generator, and the gas power generator. The complementary and coupled power generation control platform 15, the wind power generator, and the gas power generator are connected to one another through a power line. The complementary and coupled power generation control platform 15 performs complementary coupling on the power generated by the wind power generator and the gas power generator, and transmits the power generated by the wind power generator and the gas power generator to a regional power grid.

### Embodiment 6

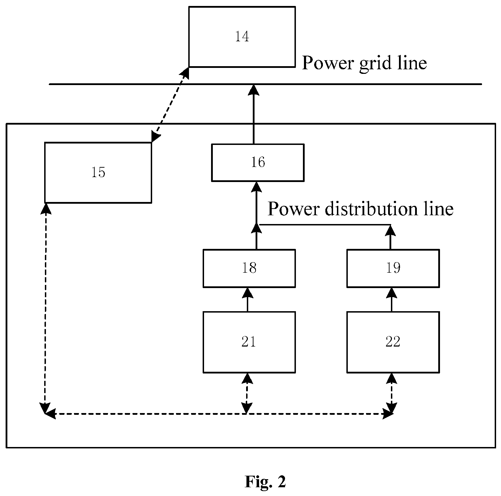

As shown in FIG. 2, an embodiment of the present invention provides a solar-gas complementary and coupled power generation system, which includes a power grid dispatching center 14, a complementary and coupled power generation control platform 15, a solar power generation device 21, and a gas power generation device 22. The solar power generation device 21 is a solar panel. The gas power generation device 22 is a gas power generator. The power grid dispatching center 14 is communicatively connected to the complementary and coupled power generation control platform 15, the solar panel, and the gas power generator. The complementary and coupled power generation control platform 15, the solar panel, and the gas power generator are connected to one another through a power line. The complementary and coupled power generation control platform 15 performs complementary coupling on the power generated by the solar panel and the gas power generator, and transmits the power generated by the solar panel and the gas power generator to a regional power grid.

### Embodiment 7

An embodiment of the present invention provides a power generation method using a wind-solar-gas complementary and coupled power generation system. The wind-solar-gas complementary and coupled power generation system includes a complementary and coupled power generation control platform 15, a wind power generation device 20, a solar power generation device 21 and a gas power generation device 22.

The wind power generation device 20 is a wind power generator. The solar power generation device 21 is a solar panel. The gas power generation device 22 is a gas power generator.

The complementary and coupled power generation control platform 15, the wind power generator, the solar panel, and the gas power generator are connected to one another through a power line. The complementary and coupled power generation control platform 15 performs complementary coupling on the power generated by the wind power generator, the solar panel, and the gas power generator, and transmits the power generated by the wind power generator, the solar panel, and the gas power generator to a regional power grid.

The method is carried out by the following steps.

In step S1, the complementary and coupled power generation system control platform sets a real-time target total power generation value of the wind power complementary and coupled power generation system.

In step S2, the complementary and coupled power generation system control platform sets a real-time target gas-complemented power generation value according to wind resource and light resource prediction results at the current time point and a future time period.

In step S3, whether the gas storage amount of the gas power generation device is sufficient is determined, wherein if the determination result is yes, proceed to step S4; and if the determination result is no, the gas power generation device proceeds to step S7.

In step S4, all real-time target power generation values P_{wind-solar} of the wind-solar power generation device are connected to the regional power grid access system.

In step S5, a real-time target gas-complemented power generation value P_{gas} = Pₛᵤₘ-P_{wind-solar} is calculated, where Pₛᵤₘ is a real-time target coupled power generation value of the wind-solar-gas complementary and coupled power generation system.

In step S6, the gas power generation device is adjusted to provide the real-time target gas-complemented power generation value P_{gas}.

In step S7, when the gas storage amount is insufficient, the power grid peak regulation energy is invoked.

In step S8, it is ensured that the real-time target total power generation value of the coupling power generation system meets the grid demand.

Obviously, the above embodiments are only some embodiments of the present invention, rather than all embodiments. Different types of wind power generators, solar power generators or gas power generators and storage batteries can be arranged to form different combinations of coupled power generation systems. The core of the method is to ensure that the real-time target total power generation value of the coupled power generation system meets the grid demand. Therefore, other schemes of forming the coupled power generation system not listed in the embodiments are all within the protection scope of the present invention. Based on the embodiments of the present invention, various changes, modifications, substitutions and improvements of the embodiments may be made by those skilled in the art without creative efforts and without departing from the protection scope of the present invention.

## Claims

1. A wind-solar-gas complementary and coupled power generation system, comprising: a complementary and coupled power generation control platform, a wind or solar power generation device, and a gas power generation device, wherein the complementary and coupled power generation control platform, the wind or solar power generation device, and the gas power generation device are connected to one another through a power line, the complementary and coupled power generation control platform performs complementary coupling on the power generated by the wind or solar power generation device and the gas power generation device, and transmits the power generated by the wind or solar power generation device and the gas power generation device to a regional power grid, and the wind or solar power generation device comprises at least one of a wind power generation device or a solar power generation device.

2. The wind-solar-gas complementary and coupled power generation system according to claim 1, wherein the gas power generation device comprises at least one of a gas turbine generator, a gas internal combustion engine generator, a gas external combustion engine generator, a hydrogen fuel cell generator or a solar-thermal-gas coupled Stirling generator.

3. The wind-solar-gas complementary and coupled power generation system according to claim 2, wherein the gas used in the gas power generation device is a combustible gas, and the combustible gas is derived from any one or a combination of a natural gas pipeline, a natural gas storage tank, an electrolytic hydrogen production device, a biomass gas supply device, a biogas gas supply device, a coke oven gas supply device, a coalbed gas, and an oilfield associated gas.

4. The wind-solar-gas complementary and coupled power generation system according to claim 1, wherein the wind power generation device comprises at least one of a horizontal-shaft wind turbine or a vertical-shaft wind turbine.

5. The wind-solar-gas complementary and coupled power generation system according to claim 1, wherein the solar power generation device comprises any one of a monocrystalline silicon solar cell, a polycrystalline silicon solar cell, an amorphous silicon solar cell, or a polycomponent compound solar cell.

6. The wind-solar-gas complementary and coupled power generation system according to any one of claims 1 to 5, wherein the gas power generation device is any one of a pure power generation gas turbine unit, a cogeneration gas turbine unit, and a thermal, power and cooling tri-generation gas turbine unit, and the cogeneration or thermal, power and cooling tri-generation gas turbine unit can be equipped with cold storage or heat storage facilities, and performs electric heating or electric cooling using grid off-peak electricity to complement the insufficient heating or cooling of the cogeneration or tri-generation unit.

7. The wind-solar-gas complementary and coupled power generation system according to any one of claims 1 to 5, wherein the gas power generation device further has a combustible gas storage device to meet the gas supply demand of the gas power generation device at any time.

8. The wind-solar-gas complementary and coupled power generation system according to any one of claims 1 to 5, further comprising a power grid dispatching center, wherein the power grid dispatching center is communicatively connected to the complementary and coupled power generation control platform, the wind or solar power generation device and the gas power generation device, and the complementary and coupled power generation control platform uniformly receives a dispatching instruction from the power grid dispatching center.

9. A power generation method, wherein the method adopts the wind-solar-gas complementary and coupled power generation system according to any one of claims 1 to 8 to generate power by the following steps:
S1: setting, by the complementary and coupled power generation system control platform, a real-time target total power generation value of the wind-solar-gas power complementary and coupled power generation system;
S2: setting, by the complementary and coupled power generation system control platform, a real-time target gas-complemented power generation value according to wind resource and light resource prediction results at the current time point and a future time period;
S3: determining whether the gas storage amount of the gas power generation device is sufficient, wherein if the determination result is yes, proceed to step S4; and if the determination result is no, the gas power generation device proceeds to step S7;
S4: connecting all the real-time target power generation values P_{wind-solar} of the wind or solar power generation device to the regional power grid access system;
S5: calculating a real-time target gas-complemented power generation value P_{gas} = Pₛᵤₘ-P_{wind-solar,} where the Pₛᵤₘ is a real-time target coupled power generation value of the wind-solar-gas complementary and coupled power generation system;
S6: adjusting the gas power generation device to provide the real-time target gas-complemented power generation value P_{gas};
S7: when the gas storage amount is insufficient, invoking the power grid peak regulation energy; and
S8: ensuring that the real-time target total power generation value of the coupled power generation system meets the grid demand.
